# EUROPEAN PATENT APPLICATION

(11) **EP 4 656 463 A1**
(43) Date of publication of application: **03.12.2025**
(21) Application number: 25171495.2
(22) Date of filing: 18.04.2025
(51) Int. Cl.: B60R 16/04

(54) **SEAT EQUIPPED WITH IN-CAB BATTERIES FOR A VEHICLE CAB, ASSOCIATED VEHICLE CAB AND ASSEMBLY METHOD**

(30) Priority: 29.05.2024 US 202418676773
(71) Applicant: VOLVO TRUCK CORPORATION, 405 08 Göteborg (SE)
(72) Inventor: STRATTON, Stephen, OAK RIDGE, 27310 (US); CRITCHLEY, David John, OAK RIDGE, 27310 (US); LUCKHAUS, Martin, GREENSBORO, 27401 (US); PHILIPSEN, Bo, GREENSBORO, 27410 (US); GRICIUS, Eviltas, GREENSBORO (US); PHILLIPS, Eric, GREENSBORO, 27455 (US); HJELT, Andrew, GREENSBORO, 27410 (US)
(74) Representative: Lavoix

(57) **Abstract**

A seat for a vehicle cab comprises:
- a seat structure, the seat structure defining an internal volume and being configured to be attached to a floor of the vehicle cab,
- an energy storage system, the energy storage system being located in the internal volume of the seat structure and being configured to provide electric power,
- a tray, configured to rest on the floor of the vehicle cab, the energy storage system resting on the tray.

Furthermore, the tray and the energy storage system are devoid of attachment to the seat structure.

## Description

### TECHNICAL FIELD

The disclosure relates generally to vehicle cab equipped with in-cab batteries. In particular aspects, the disclosure relates to a seat equipped with in-cab batteries for a vehicle cab and to an associated vehicle cab and an associated assembly method. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is known to equip a vehicle cab with batteries, located within a passenger seat. Such batteries are used to provide electrical power to an occupant of the vehicle cab and are particularly useful in vehicles consuming electrical power when parked, such as trucks.

In known systems, the batteries are directly attached to the structure of the passenger seat, thus increasing the weight of the seat. Since regulations and standards require a vehicle seat to withstand a force proportional to the seat's weight, the increased weight of the seat caused by the batteries lead to over-construction of the seat, resulting in unnecessary weight and cost. The disclosure aims to solve this issue.

### SUMMARY

According to a first aspect of the disclosure, a seat for a vehicle cab comprises:
- a seat structure, the seat structure defining an internal volume and being configured to be attached to a floor of the vehicle cab,
- an energy storage system, the energy storage system being located in the internal volume of the seat structure and being configured to provide electric power,
- a tray, configured to rest on the floor of the vehicle cab, the energy storage system resting on the tray,
wherein the tray and the energy storage system are devoid of attachment to the seat structure. The first aspect of the disclosure may seek to decouple the energy storage system from the seat structure, so that the weight of the energy storage system only rests on the floor of the vehicle cab and not on the anchorage of the floor with which the seat structure is attached to the floor. A technical benefit may include avoiding over-construction of the seat and unnecessary weight and cost, because the weight of the energy storage system is not taken into account in the weight of the seat when calculating the force to which the seat must withstand to comply with applicable regulations and standards.

Optionally, in some examples, the tray and the energy storage system are configured to be attached to the floor of the vehicle cab so as to be devoid of attachment to the seat structure. A technical benefit may include ensuring the tray and the energy storage system are decoupled from the seat structure.

Optionally, in some examples, the energy storage system comprises at least one battery resting on the tray. A technical benefit may include providing the energy storage system with reliable means for storing electrical energy

Optionally, in some examples, the at least one battery is attached to the tray and wherein the tray is configured to be attached to the floor of the vehicle cab. A technical benefit may include securely attaching the at least one battery and the tray to the floor of the vehicle.

Optionally, in some examples, the seat further comprises a clamping device and fasteners, the at least one battery is attached to the tray by the clamping device and the fasteners are configured to attach the tray to the floor of the vehicle cab. A technical benefit may include securely attaching the at least one battery and the tray to the floor of the vehicle while allowing easy disassembly of the at least one battery.

Optionally, in some examples, the clamping device comprises an upper bracket, a lower bracket and at least two rods, wherein each of the at least two rods is attached to the upper bracket and to the lower bracket so that the at least one battery and the tray are clamped between the upper bracket and the lower bracket. A technical benefit may include securely attaching the at least one battery and the tray to the floor of the vehicle while allowing easy disassembly of the at least one battery.

Optionally, in some examples, the tray comprises an upper plate, on which the at least one battery rests, and a lower plate, configured to rests on the floor of the vehicle cab, and the lower brackets extend between the upper plate and the lower plate. A technical benefit may include securely attaching the at least one battery and the tray to the floor of the vehicle.

Optionally, in some examples, the clamping device comprises a clamping bracket and at least two rods and each of the at least two rods is attached to the clamping bracket and to the tray so that the at least one battery is clamped between the clamping bracket and the tray. A technical benefit may include securely attaching the at least one battery to the tray.

Optionally, in some examples, the seat further comprises a clamping device, the clamping device comprising a clamping bracket and at least two rods. Each of the at least two rods is attached to the clamping bracket and is configured to be attached to the floor of the vehicle cab so that the at least one battery and the tray are clamped between the clamping bracket and the floor of the vehicle cab. A technical benefit may include securely attaching the at least one battery and the tray to the floor of the vehicle.

Optionally, in some examples, the seat structure comprises lateral panels delimiting the internal volume of the seat structure, the energy storage system is enclosed by the lateral panels of the seat structure and the seat structure comprises a bottom opening being configured to face the floor of the vehicle cab. A technical benefit may include isolating the inside of the vehicle cab from the energy storage system while allowing the tray to rests on the floor.

Optionally, in some examples, the tray closes the bottom opening of the seat structure. A technical benefit may include further isolating the inside of the vehicle cab from the energy storage system.

Optionally, in some examples, the seat comprises a seat cushion, the seat cushion being attached to the seat structure and delimiting the internal volume of the seat structure, along a height axis of the seat. A technical benefit may include optimizing the compactness of the seat.

Optionally, in some examples, the seat structure comprises a top lid, on which the seat cushion is attached. A technical benefit may include providing easy access to the internal volume of the seat structure and to the energy storage system.

Optionally, in some examples, the energy storage system comprises a supercapacitor located in the internal volume of the seat structure and resting on the tray. A technical benefit may include improving the performance of the energy storage system by allowing rapid storage and rapid delivery of electrical energy.

Optionally, in some examples, the supercapacitor is attached to the tray. A technical benefit may include securing the supercapacitor.

According to a second aspect of the disclosure, a seat for a vehicle cab comprises:
- a seat structure, the seat structure defining an internal volume and being configured to be attached to a floor of the vehicle cab,
- an energy storage system, the energy storage system being located in the internal volume of the seat structure and being configured to provide electric power,
- a tray, configured to rest on the floor of the vehicle cab, the energy storage system resting on the tray,
wherein the tray and the energy storage system are not attached to the seat structure. The second aspect of the disclosure may seek to decouple the energy storage system from the seat structure, so that the weight of the energy storage system only rests on the floor of the vehicle cab and not on the anchorage of the floor with which the seat structure is attached to the floor. A technical benefit may include avoiding over-construction of the seat and unnecessary weight and cost, because the weight of the energy storage system is not taken into account in the weight of the seat when calculating the force to which the seat must withstand to comply with applicable regulations and standards.

According to a third aspect of the disclosure, a vehicle cab comprises a floor and the seat as described here above, wherein the seat structure is attached to the floor and wherein the tray is resting on the floor. The third aspect of the disclosure may seek to decouple the energy storage system from the seat structure, so that the weight of the energy storage system only rests on the floor of the vehicle cab and not on the anchorage of the floor with which the seat structure is attached to the floor. A technical benefit may include avoiding over-construction of the seat and unnecessary weight and cost, because the weight of the energy storage system is not taken into account in the weight of the seat when calculating the force to which the seat must withstand to comply with applicable regulations and standards.

Optionally, in some examples, the weight of the tray and the energy storage system rests entirely on the floor. A technical benefit may include ensuring the tray and the energy storage system are decoupled from the seat structure.

Optionally, in some examples, the tray comprises at least one lifting portion spaced apart from the floor, along a height axis of the vehicle cab, and the seat structure comprises at least one retaining member extending between the at least one lifting portion and the floor. A technical benefit may include allowing for easy lifting of the seat.

Optionally, in some examples, the at least one retaining member is spaced apart from the at least one lifting portion, along the height axis of the vehicle cab. A technical benefit may include ensuring the weight of the tray and the energy storage system rests entirely on the floor.

According to a fourth aspect of the disclosure, a method for assembling the vehicle cab described here above comprises:
- outside of the vehicle cab, assembling the seat by positioning the at least one lifting portion of the tray on top of the at least one retaining member of the seat structure and by positioning the energy storage system on the tray,
- lifting the seat along a height axis of the seat, by lifting the seat structure,
- inserting the seat into the vehicle cab and positioning the seat on the floor of the vehicle cab, and
- attaching the seat structure to the floor of the vehicle cab.

The fourth aspect of the disclosure may seek to allow simultaneous lifting of both the seat structure and the energy storage system. A technical benefit may include facilitating the assembly of the vehicle cab.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle cab according to an example, comprising a seat equipped with in-cab batteries according to another example.
**FIG. 2** is a perspective view of a seat equipped with in-cab batteries according to another example.
**FIG. 3** is a side view of the seat of Figure 2.
**FIG. 4** is a top view of the seat of Figures 2 and 3.
**FIG. 5** is a bottom view of the seat of Figures 2 to 4.
**FIG. 6** is a schematic view of a seat according to another example.

### DETAILED DESCRIPTION

The detailed description set forth below provides information and examples of the disclosed technology with sufficient detail to enable those skilled in the art to practice the disclosure.

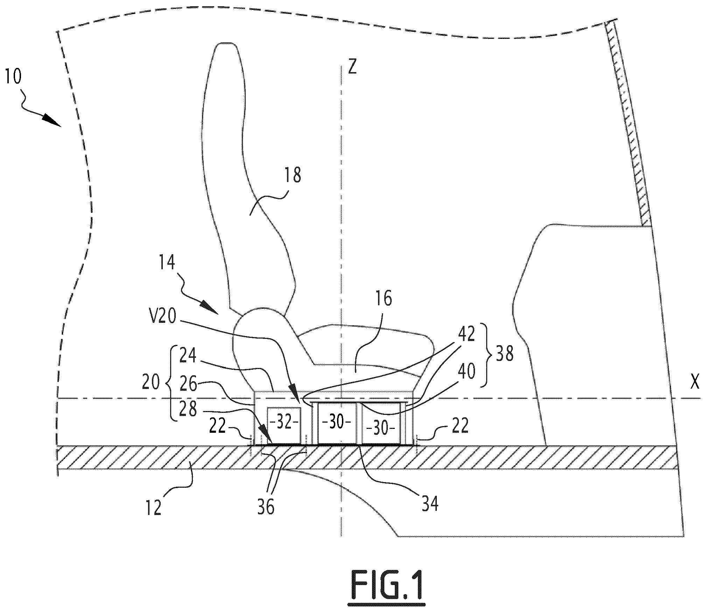

Figure 1 shows a vehicle cab 10. For the clarity of the figure, the vehicle cab 10 is only partially shown. In a preferred example, the vehicle cab 10 is a truck cab. As an alternative, not shown, the vehicle cab is the cab of another heavy-duty vehicle, such as a bus or construction equipment, or of another vehicle type.

The vehicle cab 10 comprises a floor 12 and a seat 14 installed on the floor 12. The seat 14 is a passenger seat: the vehicle cab 10 also comprises a driver's seat, not shown, which is distinct from the seat 14. A height axis of the vehicle cab 10, perpendicular to the floor 12, is noted Z and a longitudinal axis of the vehicle cab, parallel to the floor 12, is noted X. The height axis Z is preferably vertical.

The seat 14 comprises a seat cushion 16, a seat back 18 and a seat structure 20. The seat structure 20 is attached to the floor 12 of the vehicle cab 10, so that the height axis Z and the longitudinal X of the vehicle cab 10 also correspond to a height axis and to a longitudinal axis of the seat 14. In other words, when the seat 14 is installed on the floor 12, the height axis Z refers indifferently to the height axis of the vehicle cab 10 and of the seat 14 and the longitudinal axis X refers indifferently to the longitudinal axis of the vehicle cab 10 and of the seat 14. In the example of Figure 1, the seat structure 20 is attached to the floor 12 with fasteners 22, shown schematically. Fasteners 22 may be bolts, screws or studs. The seat structure is attached to anchorages (not shown) of the floor 12, in the example with fasteners 22.

The seat structure 20 defines an internal volume V20. Along the height axis Z, the seat structure 20 is located between the floor 12 and the seat cushion 16. Hence, the internal volume V20 is located under the seat cushion 16 and the seat cushion 16 delimits the internal volume V20 along the height axis Z. The seat cushion 16 and the seat back 18 are attached to the seat structure 20. Hence, the seat structure 20 is a seat base. In another example, the seat cushion 16 may be secured to a support member (not shown) and the support member may delimit the internal volume V20 of the seat structure 20. In the illustrated example, the seat structure 20 comprises a top lid 24, on which the seat cushion 16 is attached and on which the seat back 18 is preferably attached. The internal volume V20 of the seat structure 20 is therefore delimited by the top lid 24 and by the seat cushion 16, along the height axis Z.

The seat structure 20 preferably comprises lateral panels 26 delimiting the internal volume V20 perpendicular to the height axis Z, i.e. parallel to the floor 12.

Preferably, the top lid 24 is pivotally attached to at least one of the lateral panels 26, for example through hinges, thus allowing the top lid 24, the seat cushion 16 and the seat back 18 to be pivoted so as to allow access to the internal volume V20 of the seat structure 20.

The seat structure 20 preferably comprises a bottom opening 28, facing the floor 12. In other words, the bottom opening is located at the bottom of the seat structure 20, along the height axis Z. Hence, the seat structure 20 is preferably closed on its sides, perpendicular to the height axis, closed at its top, along the height axis Z, and open at its bottom, along the height axis Z.

The seat 14 comprises an energy storage system, located in the internal volume V20 of the seat structure 20. The energy storage system is enclosed by the seat structure 20, in particular by the lateral panels 26 and the top lid 24. Hence, the lateral panels 26 and the top lid 24 of the seat structure 20 form a seat box, that is, an enclosure, for the energy storage system.

The energy storage system is configured to provide electric power. In the example, the energy storage system comprises at least one battery 30. Preferably, an energy storage capacity of the at least one battery 30 is comprised between 40 and 250 ampere-hour.

Preferably, each battery of the at least one battery 30 is a 12-volt battery, for example a lead-acid battery or another type of battery, such as a lithium-ion battery.

The electric power provided by the energy storage system and in particular by the at least one battery 30 may be used to power an entertainment system of the vehicle cab, a fridge, or other auxiliary systems of the vehicle cab, and/or may be used to start an engine or power an electric motor of the vehicle of the vehicle cab 10.

In the example, the energy storage system of the seat 14 comprises two batteries 30, which are preferably identical. As an alternative, not shown, the seat 14 comprises only one battery, or more than two batteries.

Preferably, the energy storage system of the seat 14 comprises a supercapacitor 32, located in the internal volume V20 of the seat structure 20. The supercapacitor 32 may be used to store electric power recovered during regenerative braking and to power an electric motor of the vehicle of the vehicle cab 10. The supercapacitor 32 is preferably an ultracapacitor. Preferably, the supercapacitor 32 is located behind the at least one battery 30, along the longitudinal axis X.

Hence, in the example, the energy storage system comprises two batteries 30 and a supercapacitor 32. It is to be understood that this example is not limitative and that the energy storage system may comprise different number and type of energy storage devices to provide electric power to the vehicle of the vehicle cab 10.

The seat 14 comprises a tray 34, which is resting on the floor 12 and on which the energy storage system, i.e. the at least one battery 30 and the supercapacitor 32, is resting. Since the energy storage system, i.e. the at least one battery 30 and the supercapacitor 32, is located within the internal volume V20 of the seat structure 20, the tray 34 is also located at least partly within the internal volume V20. In other words, the tray 34 closes, at least partially, the bottom opening 28 of the seat structure 20.

The tray 34 is not attached to the seat structure 20, that is, the tray 34 is not fixed, fastened, or connected to the seat structure. Furthermore, the at least one battery 30 and the supercapacitor 32 are also not attached to the seat structure 20. In summary, the at least one battery 30, the supercapacitor 32 and the tray 34 are not attached to the seat structure 20. In particular, the at least one battery 30, the supercapacitor 32 and the tray 34 are not attached to the seat structure 20 when the seat structure 20 is attached to the floor 12 and when the tray 34 is resting on the floor 12. In other words, when the seat 14 is installed on the floor 12, the at least one battery 30, the supercapacitor 32 and the tray 34 can be moved independently of the seat structure 20. Hence, the weight of the at least one battery 30 and the supercapacitor 32 rests entirely on the tray 34 and, consequently, on the floor 12 as the tray 34 is resting on the floor 12.

To prevent the at least one battery 30, the supercapacitor 32 and the tray 34 from moving within the cab 10, the assembly formed by these components is attached to the floor 12. More precisely, the assembly formed by these components is attached to different anchorages (not shown) of the floor 12 than the seat structure 20. Hence, the tray 34 and the energy storage system are decoupled from the seat structure 20.

In the example of Figure 1, only the tray 34 is attached to the floor 12, with fasteners 36, shown schematically. Fasteners 36 may be bolts, screws or studs.

Furthermore, the at least one battery 30 is attached to the tray 34. To this end, the seat 14 comprises a clamping device 38 to attach the at least one battery 30 to the tray 34.

In the example of Figure 1, the clamping device 38 comprises a clamping bracket 40 and two rods 42. Each of the two rods 42 is attached to the clamping bracket 40 and to the tray 34 so that the at least one battery 30 is clamped between the clamping bracket 40 and the tray 34. As an alternative, not shown, the clamping device 38 comprises more than two rods 42.

As the tray 34 is attached to the floor 12, the at least one battery 30 is also attached to the floor. In other words, in the example of Figure 1, the at least one battery 30 is not directly attached to the floor 12 with fasteners, but is attached to the floor by being attached to the tray 34, via the clamping device 38, the tray being attached to the floor.

Preferably, the supercapacitor 32 is attached to the tray 34, for example through fasteners, not shown in the example of Figure 1.

The tray 34 may comprise at least one lifting portion, spaced apart from the floor 12 along the height axis Z, and the seat structure 20 may comprise at least one retaining member extending between the at least one lifting portion and the floor 12. In other words, the at least one retaining member of the seat structure 20 extends between the floor 12 and the lifting portion of the tray 34. Furthermore, the at least one retaining member is spaced apart from the at least one lifting portion, along the height axis Z, so that the tray 34 does not rest on the at least one retaining member. The at least one retaining member may be one or more cross bars.

The at least one lifting portion and the at least one retaining member allow for easy assembling of the vehicle cab 10, i.e. for easy installation of the seat 14 onto the floor 12.

The assembly method of the seat 14 in the vehicle cab 10 is now described. To install the seat 14 onto the floor 12, the seat 14 is first assembled outside of the vehicle cab 10, by positioning the at least one lifting portion of the tray 34 on top of the at least one retaining member of the seat structure 20 and by positioning the at least one battery 30 and the supercapacitor 32 on the tray, i.e. in the internal volume V20 of the seat structure 20. This assembly is, for example, performed on a floor of a workshop. Once the seat 14 assembled, the tray 34 and the seat structure 20 are resting on said floor and the at least one retaining member of the seat structure is spaced apart from the at least one lifting portion of the tray.

Then, after assembly of the seat 14, the seat 14 is lifted along the height axis Z of the seat, by lifting the seat structure 20. Once the seat structure 20 is lifted, the at least one retaining member of the seat structure comes in abutment against the at least one lifting portion of the tray 34 so that the seat structure 20 lifts the tray 34 and, consequently, the at least one battery 30 and the supercapacitor 32 resting on the tray. Therefore, the seat structure 20 is in contact with the tray 34 once lifted. In other words, the seat structure 20 comprises retainers, i.e. the at least one retaining member, on which the tray 34 rests when the seat 14 is lifted.

Thus, while being lifted, the seat 14 in inserted into the vehicle cab 10 and is positioned on the floor 12 of the vehicle cab so that the seat structure 20 and the tray 34 rest on the floor. Once the seat structure 20 and the tray 34 rest on the floor 12, the at least one retaining member of the seat structure is spaced apart from the at least one lifting portion of the tray, along the height axis Z of the vehicle cab.

Then the seat structure 20 is attached to the floor 12, in the example with the fasteners 22, and the assembly formed by the at least one battery 30, the supercapacitor 32 and the tray 34 is attached to the floor 12, in the example by attaching the tray 34 to the floor 12 with the fasteners 36 and by attaching the at least one battery 30 to the tray with the clamping device 38.

Hence, the at least one retaining member of the seat structure 20 and the at least one lifting portion of the tray 34 allow for the seat structure 20, the tray 34, the at least one battery 30 and the supercapacitor 32 to be lifted simultaneously, while allowing the tray 34, the at least one battery 30 and the supercapacitor 32 not to be attached to the seat structure.

Because the at least one battery 30, the supercapacitor 32 and the tray 34 are not attached to the seat structure 20, the weight of the at least one battery 30 and the supercapacitor 32 rests entirely on the floor 12. Therefore, the weight of the at least one battery 30, the supercapacitor 32 and the tray 34 is not added to the weight of the seat structure 20, seat cushion 16 and seat back 18 when calculating the force to which the seat 14 must withstand to comply with applicable regulations and standards.

In particular, the Federal Motor Vehicle Safety Standard 207 (FMVSS 207), applicable as of March 30, 2022, corresponding to Title 49 of the Code of Federal Regulations (CFR) 571.207, specifies the minimum forces and torques that the seat 14 must be able to withstand and these forces and torques are proportional to the weight of the seat 14, more precisely to the weight to all the components sharing the anchorages of the floor 12 to which the seat structure 20 is attached. Because the at least one battery 30, the supercapacitor 32 and the tray 34 are not attached to the seat structure 20, they do not share the anchorages of the floor 12 to which the seat structure 20 is attached and their weight does not have to be taken into account when determining the weight of the seat 14. Hence, because the tray and the energy storage system are devoid of attachment to the seat structure 20, they are decoupled from the seat structure and their weight is not taken into account. In other words, only the weight of the seat structure 20, seat cushion 16 and seat back 18 are taken into account to calculate the forces and torques the seat 14 must be able to withstand. Hence, over-construction of the seat 14 is avoided, diminishing the weight and cost of the seat 14.

In addition, the at least one retaining member of the seat structure 20 and the at least one lifting portion of the tray 34 allow for easy handling of the seat 14, by avoiding separate lifting of the seat structure 20 and of the tray 34, without requiring the tray 34 to be attached to the seat structure 20.

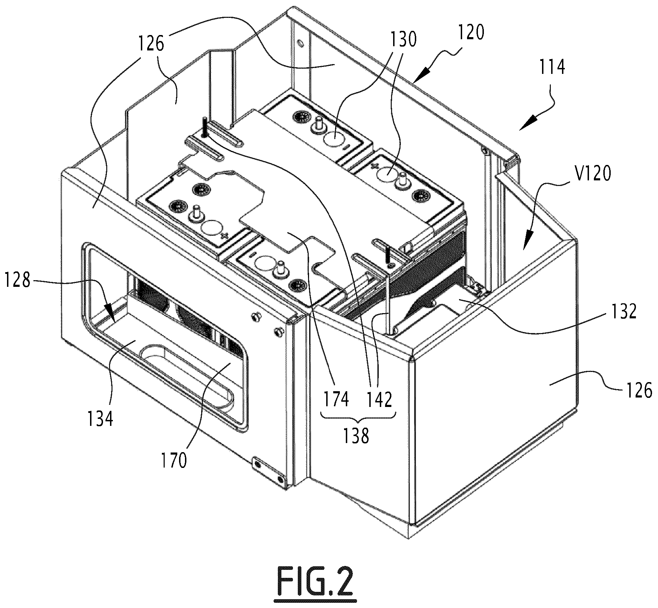

A seat 114 according to another example is now described in relation with Figures 2 to 5. The seat 114 is intended to be installed on the floor 12 of the vehicle cab 10 of Figure 1.

In the seat 114, elements similar to those of seat 14 have the same references increased by 100 and operate in the same way. In the following, the differences between seats 14 and 114 are described. Furthermore, if a component of seat 114 is mentioned but not shown in Figures 2 to 5, it corresponds to the same component of seat 14 in Figure 1.

The seat 114 comprises a seat structure 120, a seat cushion, not shown and a seat back, not shown.

The seat structure 120 defines an internal volume V120 and is delimited by lateral panels 126, a top lid, not shown, and a bottom opening 128. The seat structure 120 is attached to the floor 12 with fasteners, not shown. More precisely, the seat structure 120 is attached to anchorages (not shown) of the floor 12. The seat structure 120 further comprises a mounting plate 150, extending parallel to the floor 12 and with holes 152 for the passage of fasteners with which the seat structure 120 is attached to the floor 12.

The seat structure 120 comprises at least one retaining member. The at least one retaining member extends parallel to the floor 12 at the bottom of the seat structure 120, along the height axis Z.

In the example of Figures 2 to 5, the at least one retaining member comprises a cross bar 154 extending between two opposite lateral panels 126. Furthermore, the cross bar 154 may comprise holes 156 for the passage of fasteners with which the seat structure 120 is attached to the floor 12. In the example of Figures 2 to 5, the at least one retaining member also comprises a flange, not shown, which extends from the lateral panels 126 parallel to the floor 12.

The seat 114 further comprises an energy storage system. In the example, the energy storage system comprises at least one battery 130 a supercapacitor 132. In the current example, the at least one battery 130 comprises two batteries 130. The seat 114 further comprises a tray 134 on which the energy storage system, i.e. the at least one battery 130 and the supercapacitor 132, is resting. The energy storage system, i.e. the at least one battery 130 and the supercapacitor 132, is located in the internal volume V120 of the seat structure 120. The tray 134 is resting on the floor 12 of the vehicle cab 10.

The tray 134 comprises at least one lifting portion. Preferably, the tray 134 comprises as much lifting portions than the seat structure 120 comprises retaining members.

When the tray 134 is resting on the floor 12 of the vehicle cab 10, the at least one lifting portion is spaced apart from the floor 12, along the height axis Z of the vehicle cab. Furthermore, the at least one retaining member of the seat structure 120 extends between the lifting portion of the tray 134 and the floor 12.

The at least one retaining member and the at least one lifting portion allow for the tray 134 to be lifted by the seat structure 120 when the seat structure is lifted, thus facilitating the installation of the seat 114 in the vehicle cab 10, similarly to the assembly method of the seat 14 in the vehicle cab 10 described here above.

In addition, the at least one retaining member is spaced apart from the at least one lifting portion, along the height axis Z of the vehicle cab, when the seat structure 120 is fixed to the floor 12 and when the tray 134 is resting on the floor 12, so that the weight of the at least one battery 130 and the supercapacitor 132 rests entirely on the floor 12.

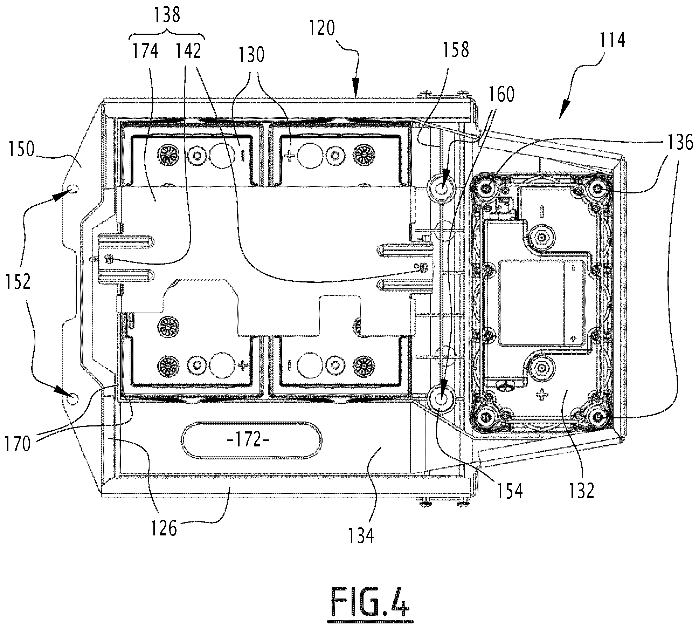

In the example of Figures 2 to 5, the at least one lifting portion comprises a first lifting portion 158. As visible on Figure 4, the first lifting portion 158 may comprise holes 160 aligned with holes 156 of the cross bar 154 for the passage of fasteners with which the seat structure 120 is attached to the floor 12. Holes 160 have a greater diameter than holes 156 so that the tray 134 is not attached to the floor 12 by said fasteners. In the example of Figures 2 to 5, the at least one lifting portion also comprises a lid, not shown, extending above the flange of the at least one retaining member. In other words, the lid acts as a second lifting portion.

In the example of Figures 2 to 5, the tray 134 comprises a battery portion 162, on which the at least one battery 130 is resting, and a supercapacitor portion 164, on which the supercapacitor 132 is resting. Furthermore, the first lifting portion 158 is located between the battery portion 162 and the supercapacitor portion 164.

The location of the first lifting portion 158, in combination with the lid extending above the flange, allow the tray 134 to be easily lifted by the retaining member, i.e. by the cross bar 154 and the flange. In addition, the lifting of the tray is secured, because the tray is lifted both by the cross bar and the flange.

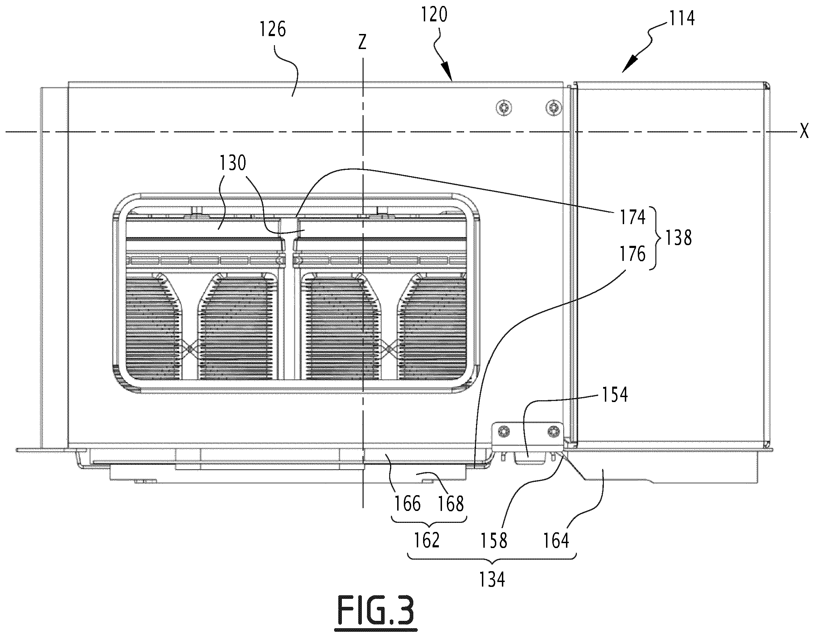

As visible on Figure 3, the battery portion 162 of the tray 134 may comprise an upper plate 166, on which the at least one battery 130 rests, and a lower plate 168, resting of the floor 12 of the vehicle cab 10. The bottom of the lower plate 168 is leveled with the bottom of the supercapacitor portion 164 so that the tray can lie flat on the floor 12.

The battery portion 162 may comprise retaining walls 170 preventing the at least one battery 130 to move relative to the tray 134 parallel to the tray, i.e. perpendicular to the height axis Z.

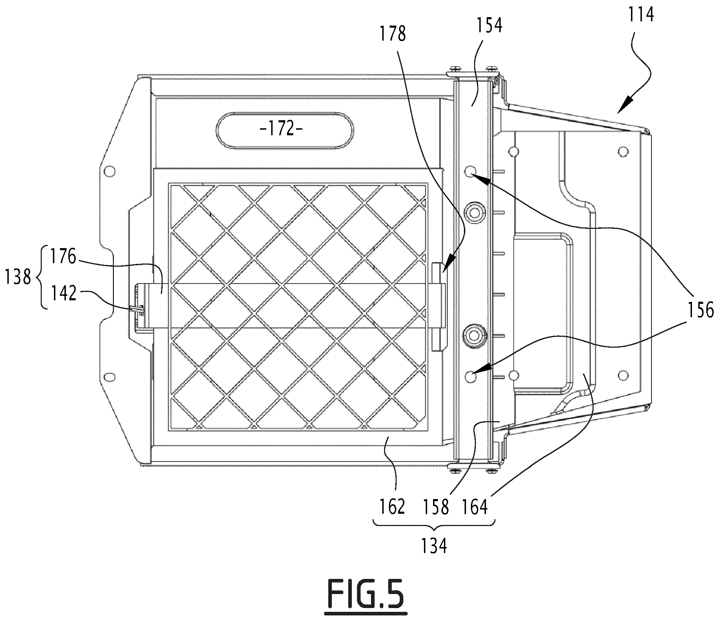

As visible on Figure 5, the tray 134 essentially closes the bottom opening 128 of the seat structure 120.

The tray 134 may comprise a cable opening 172 allowing cables connected to the at least one battery 130 and to the supercapacitor 132 to extend through the tray. In the example, the cable opening 172 is located in the battery portion 162. Preferably, the cable opening 172 is aligned with an opening in the floor 12 allowing said cables to extend through the floor 12.

In the example of Figures 2 to 5, the tray 134 is attached to the floor 12 of the vehicle cab 10 with fasteners 136. More precisely, the tray 134 is attached to anchorages (not shown) of the floor 12, which are distinct from the anchorages of the floor to which the seat structure 120 is attached. Hence, the energy storage system and the tray 134 are devoid of attachment to the seat structure 120 and are therefore decoupled from the seat structure. Preferably, fasteners 136 are screws. Furthermore, as best visible on Figure 4, fasteners 136 may simultaneously be used to attach the tray 134 to the floor 12 and to attach the supercapacitor 132 to the tray 134. Hence, in the example of Figures 2 to 5, the supercapacitor 132 is attached to the tray 134 and to the floor 12 with fasteners 136.

Furthermore, in the example of Figures 2 to 5, the at least one battery 130 is attached to the tray 134. To this end, the seat 114 comprises a clamping device 138 to attach the at least one battery 130 to the tray 134. The clamping device 138 comprises an upper bracket 174, a lower bracket 176 and two rods 142. Each of the two rods 142 is attached to the upper bracket 174 and to the lower bracket 176 so that the at least one battery 130 and the tray 134 are clamped between the upper bracket 174 and the lower bracket 176. More precisely, and as visible on Figure 3, the upper bracket 174 is located at the top of the at least one battery 134 and the lower bracket 176 extends between the upper plate 166 and the bottom plate 168 of the tray 134, so that the at least one battery 130 and at least one part of the tray 134 are located between the upper bracket 174 and the lower bracket 176, allowing them to be clamped between the upper bracket and the lower bracket. In other words, the at least one battery 130 is attached to the tray 134 by clamping the tray and the at least one battery between the upper plate 166 and the bottom plate 168. As an alternative, not shown, the clamping device 138 comprises more than two rods 142.

As visible on Figure 5, one of the two rods 142 extends beyond the tray 134 and the other rod 142 extends through a hole 178 of the tray 134.

As the tray 134 is attached to the floor 12, the at least one battery 130 is also attached to the floor. In other words, in the example of Figures 2 to 5, the at least one battery 130 is not directly attached to the floor 12 with fasteners. On the contrary, the at least one battery 130 is attached to the floor by being attached to the tray 134, via the clamping device 138, the tray being attached to the floor.

Hence, the seat 114 differs from the seat 14 mainly in that the clamping device 138 comprises the upper bracket 174 and the lower bracket 176 clamping both the at least one battery 130 and the tray 134, whereas the clamping device 38 comprises a clamping bracket 40, the at least one battery 30 being clamped between the tray 34 and the clamping bracket 40.

In seat 114 as in seat 14, the weight of the at least one battery 130 and the supercapacitor 132 rests entirely on the floor 12, because the tray 134 is not attached to the seat structure 120, in particular when the seat 114 is installed on the floor 12, i.e. when the seat structure 120 is attached to the floor 12 and when the tray 134 rests on the floor. Therefore, as for the seat 14, the weight of the at least one battery 130, the supercapacitor 132 and the tray 134 is not taken into account when calculating the forces and torques to which the seat 114 must withstand. In other words, the weight of the at least one battery 130, the supercapacitor 132 and the tray 134 is not considered as part of the weight of the seat 114 by applicable regulations and standards, thus avoiding over-construction of the seat 114.

In addition, the at least one retaining member (in the example two retaining members) of the seat structure 120 and the at least one lifting portion (in the example two lifting portions) of the tray 134 allow for easy handling of the seat 114, by avoiding separate lifting of the seat structure 120 and of the tray 134, without requiring the tray 134 to be attached to the seat structure 120.

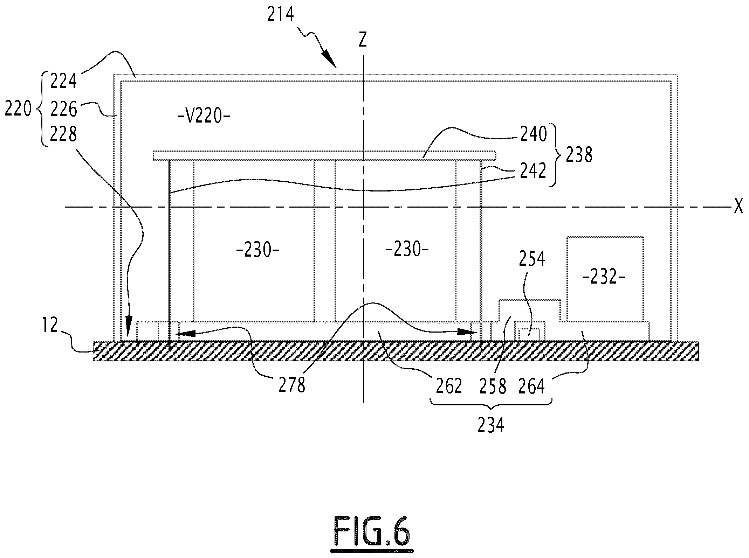

A seat 214 according to another example is now described in relation with Figure 6. The seat 214 is intended to be installed on the floor 12 of the vehicle cab 10 of Figure 1.

In the seat 214, elements similar to those of seat 14 have the same references increased by 200 and operate in the same way. In the following, the differences between seats 14 and 214 are described. Furthermore, if a component of seat 214 is mentioned but not shown in Figure 6, it corresponds to the same component of seat 14 in Figure 1.

The seat 214 comprises a seat structure 220 defining an internal volume V220, a seat cushion, not shown and a seat back, not shown. The seat structure 220 comprises lateral panels 226, a top lid 224 on which the seat cushion is attached and a bottom opening 228. The seat structure 220 may comprise a retaining member 254, which is, in the example, a cross bar extending between two opposite lateral panels 226. The seat structure 220 is attached to the floor 12 by fasteners, not shown. More precisely, the seat structure 220 is attached to anchorages (not shown) of the floor 12.

The seat 214 further comprises an energy storage system preferably comprising at least one battery 230, in the example two batteries 230. The seat 214 further comprises a tray 234 on which the energy storage system, i.e. the at least one battery 230, is resting. The tray 234 closes at least partially the bottom opening 228. The energy storage system of the seat 214 may also comprise a supercapacitor 232 resting on the tray 234. The energy storage system, i.e. the at least one battery 230 and the supercapacitor 232, is located in the internal volume V220 of the seat structure 220. The tray 234 is resting on the floor 12 of the vehicle cab 10.

The tray 234 may comprise a lifting portion 258 spaced apart from the floor 12, along the height axis Z, when the tray 234 is resting on the floor 12. Furthermore, the retaining member 254 of the seat structure 220 extends between the lifting portion 258 of the tray 234 and the floor 12. The retaining member 254 and the lifting portion 258 allow for the tray 234 to be lifted by the seat structure 220 when the seat structure is lifted, thus facilitating the installation of the seat 214 in the vehicle cab 10, similarly to the assembly method of the seat 14 in the vehicle cab 10 described here above. In addition, the retaining member 254 is spaced apart from the lifting portion 258, along the height axis Z of the vehicle cab, when the seat structure 220 is fixed to the floor 12 and when the tray 234 is resting on the floor 12, so that the weight of the at least one battery 230 and the supercapacitor 232 rests entirely on the floor 12.

In the example of Figure 6, the tray 234 comprises a battery portion 262, on which the at least one battery 230 is resting, and a supercapacitor portion 264, on which the supercapacitor 232 is resting. Furthermore, the lifting portion 258 is located between the battery portion 262 and the supercapacitor portion 264.

In the example of Figure 6, the at least one battery 230 and the tray 234 are not directly fastened to the floor 12 with fasteners, but are attached to the floor by being clamped to the floor. To this end, the seat 214 comprises a clamping device 238 having a clamping bracket 240 and at least two rods 242, each of the at least two rods 242 being attached to the clamping bracket 240 and to the floor 12 so that the at least one battery 230 and the tray 234 are clamped between the clamping bracket 240 and the floor 12. Hence, the at least one battery 230 and the tray 234 are attached to the floor 12 by being clamped between the floor 12 and the clamping bracket 240. More precisely, the at least two rods 242 are attached to anchorages (not shown) of the floor 12, which are distinct from the anchorages of the floor to which the seat structure 220 is attached. Hence, the energy storage system and the tray 234 are devoid of attachment to the seat structure 220 and are therefore decoupled from the seat structure.

The tray 234 may comprise holes 278 for the passage of the rods 242 attached to the clamping bracket 240 and to the floor 12. Alternatively, at least one of the rods 242 may extends beyond the tray 234 instead of through a hole of the tray.

The supercapacitor 232 may be fixed to the tray 234 with fasteners, not shown.

Hence, the seat 214 differs from the seat 14 mainly in that, in seat 214, both the at least one battery 230 and the tray 234 are clamped to the floor 12 by the clamping device 238, whereas in seat 14 the at least one battery 30 is clamped to the tray 34 by the clamping device 38 and the tray is attached to the floor 12 by the fasteners 36.

In seat 214 as in seat 14, the weight of the at least one battery 230 and the supercapacitor 232 rests entirely on the floor 12, because the tray 234 is not attached to the seat structure 220, in particular when the seat 214 is installed on the floor 12, i.e. when the seat structure 220 is attached to the floor 12 and when the tray 234 rests on the floor. Therefore, as for the seats 14 and 114, the weight of the at least one battery 230, the supercapacitor 232 and the tray 234 is not taken into account when calculating the forces and torques to which the seat 214 must withstand. In other words, the weight of the at least one battery 230, the supercapacitor 232 and the tray 234 is not considered as part of the weight of the seat 214 by applicable regulations and standards, thus avoiding over-construction of the seat 214.

In addition, the retaining member 254 of the seat structure 220 and the lifting portion 258 of the tray 234 allow for easy handling of the seat 214, by avoiding separate lifting of the seat structure 220 and of the tray 234, without requiring the tray 234 to be attached to the seat structure 220. Preferably, the retaining member 254 of the seat structure 220 also comprises a flange, not shown, and the lifting portion of the tray 234 also comprises a lid, not shown and extending above said flange, to facilitate and secure the lifting of the tray by the seat structure.

Example 1: a seat for a vehicle cab, the seat comprising:
- a seat structure, the seat structure defining an internal volume and being configured to be attached to a floor of the vehicle cab,
- an energy storage system, the energy storage system being located in the internal volume of the seat structure and being configured to provide electric power,
- a tray, configured to rest on the floor of the vehicle cab, the energy storage system resting on the tray,
wherein the tray and the energy storage system are devoid of attachment to the seat structure.

Example 2: the seat of example 1, wherein the tray and the energy storage system are configured to be attached to the floor of the vehicle cab so as to be devoid of attachment to the seat structure.

Example 3: the seat of example 1, wherein the energy storage system comprises at least one battery resting on the tray.

Example 4: the seat of example 3, wherein the at least one battery is attached to the tray and wherein the tray is configured to be attached to the floor of the vehicle cab.

Example 5: the seat of example 4, further comprising a clamping device and fasteners, wherein the at least one battery is attached to the tray by the clamping device and wherein the fasteners are configured to attach the tray to the floor of the vehicle cab.

Example 6: the seat of example 5, wherein the clamping device comprises an upper bracket, a lower bracket and at least two rods, wherein each of the at least two rods is attached to the upper bracket and to the lower bracket so that the at least one battery and the tray are clamped between the upper bracket and the lower bracket.

Example 7: the seat of example 6, wherein the tray comprises an upper plate, on which the at least one battery rests, and a lower plate, configured to rests on the floor of the vehicle cab, and wherein the lower brackets extend between the upper plate and the lower plate.

Example 8: the seat of example 5, wherein the clamping device comprises a clamping bracket and at least two rods and wherein each of the at least two rods is attached to the clamping bracket and to the tray so that the at least one battery is clamped between the clamping bracket and the tray.

Example 9: the seat of example 3, further comprising a clamping device, the clamping device comprising a clamping bracket and at least two rods, wherein each of the at least two rods is attached to the clamping bracket and is configured to be attached to the floor of the vehicle cab so that the at least one battery and the tray are clamped between the clamping bracket and the floor of the vehicle cab.

Example 10: the seat of example 1, wherein the seat structure comprises lateral panels delimiting the internal volume of the seat structure, wherein the energy storage system is enclosed by the lateral panels of the seat structure and wherein the seat structure comprises a bottom opening being configured to face the floor of the vehicle cab.

Example 11: the seat of example 10, wherein the tray closes the bottom opening of the seat structure.

Example 12: the seat of example 1, wherein the seat comprises a seat cushion, the seat cushion being attached to the seat structure and delimiting the internal volume of the seat structure, along a height axis of the seat.

Example 13: the seat of example 12, wherein the seat structure comprises a top lid, on which the seat cushion is attached.

Example 14: the seat of example 1, wherein the energy storage system comprises a supercapacitor located in the internal volume of the seat structure and resting on the tray.

Example 15: the seat of example 14, wherein the supercapacitor is attached to the tray.

Example 16: a seat for a vehicle cab, the seat comprising:
- a seat structure, the seat structure defining an internal volume and being configured to be attached to a floor of the vehicle cab,
- an energy storage system, the energy storage system being located in the internal volume of the seat structure and being configured to provide electric power,
- a tray, configured to rest on the floor of the vehicle cab, the energy storage system resting on the tray,
wherein the tray and the energy storage system are not attached to the seat structure.

Example 17: a vehicle cab comprising a floor and the seat of example 1, wherein the seat structure is attached to the floor and wherein the tray is resting on the floor.

Example 18: the vehicle cab of example 17, wherein the weight of the tray and the energy storage system rests entirely on the floor.

Example 19: the vehicle cab of example 17, wherein the tray comprises at least one lifting portion spaced apart from the floor, along a height axis of the vehicle cab, and wherein the seat structure comprises at least one retaining member extending between the at least one lifting portion and the floor.

Example 20: the vehicle cab of example 19, wherein the at least one retaining member is spaced apart from the at least one lifting portion, along the height axis of the vehicle cab.

Example 21: a method for assembling the vehicle cab of example 19, comprising:
- outside of the vehicle cab, assembling the seat by positioning the at least one lifting portion of the tray on top of the at least one retaining member of the seat structure and by positioning the energy storage system on the tray,
- lifting the seat along a height axis of the seat, by lifting the seat structure,
- inserting the seat into the vehicle cab and positioning the seat on the floor of the vehicle cab, and
- attaching the seat structure to the floor of the vehicle cab.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A seat for a vehicle cab, the seat comprising:
- a seat structure, the seat structure defining an internal volume and being configured to be attached to a floor of the vehicle cab,
- an energy storage system, the energy storage system being located in the internal volume of the seat structure and being configured to provide electric power,
- a tray, configured to rest on the floor of the vehicle cab, the energy storage system resting on the tray,
wherein the tray and the energy storage system are devoid of attachment to the seat structure.

2. The seat of claim 1, wherein the tray and the energy storage system are configured to be attached to the floor of the vehicle cab so as to be devoid of attachment to the seat structure.

3. The seat of any one of claims 1-2, wherein the energy storage system comprises at least one battery resting on the tray.

4. The seat of claim 3, wherein the at least one battery is attached to the tray and wherein the tray is configured to be attached to the floor of the vehicle cab.

5. The seat of claim 4, further comprising a clamping device and fasteners, wherein the at least one battery is attached to the tray by the clamping device and wherein the fasteners are configured to attach the tray to the floor of the vehicle cab.

6. The seat of claim 5, wherein the clamping device comprises an upper bracket, a lower bracket and at least two rods, wherein each of the at least two rods is attached to the upper bracket and to the lower bracket so that the at least one battery and the tray are clamped between the upper bracket and the lower bracket.

7. The seat of claim 6, wherein the tray comprises an upper plate, on which the at least one battery rests, and a lower plate, configured to rests on the floor of the vehicle cab, and wherein the lower brackets extend between the upper plate and the lower plate.

8. The seat of claim 5, wherein the clamping device comprises a clamping bracket and at least two rods and wherein each of the at least two rods is attached to the clamping bracket and to the tray so that the at least one battery is clamped between the clamping bracket and the tray.

9. The seat of claim 3, further comprising a clamping device, the clamping device comprising a clamping bracket and at least two rods, wherein each of the at least two rods is attached to the clamping bracket and is configured to be attached to the floor of the vehicle cab so that the at least one battery and the tray are clamped between the clamping bracket and the floor of the vehicle cab.

10. The seat of any one of claims 1-9, wherein the seat structure comprises lateral panels delimiting the internal volume of the seat structure, wherein the energy storage system is enclosed by the lateral panels of the seat structure, wherein the seat structure comprises a bottom opening being configured to face the floor of the vehicle cab and wherein, preferably, the tray closes the bottom opening of the seat structure.

11. The seat of any one of claims 1-10, wherein the seat comprises a seat cushion, the seat cushion being attached to the seat structure and delimiting the internal volume of the seat structure, along a height axis of the seat and wherein, preferably, the seat structure comprises a top lid, on which the seat cushion is attached.

12. The seat of any one of claims 1-11, wherein the energy storage system comprises a supercapacitor located in the internal volume of the seat structure and resting on the tray and wherein, preferably, the supercapacitor is attached to the tray.

13. A vehicle cab comprising a floor and the seat of any one of claims 1-12, wherein the seat structure is attached to the floor, wherein the tray is resting on the floor and wherein, preferably, the weight of the tray and the energy storage system rests entirely on the floor.

14. The vehicle cab of claim 13, wherein the tray comprises at least one lifting portion spaced apart from the floor, along a height axis of the vehicle cab, wherein the seat structure comprises at least one retaining member extending between the at least one lifting portion and the floor and wherein, preferably, the at least one retaining member is spaced apart from the at least one lifting portion, along the height axis of the vehicle cab.

15. A method for assembling the vehicle cab of claim 14, comprising:
- outside of the vehicle cab, assembling the seat by positioning the at least one lifting portion of the tray on top of the at least one retaining member of the seat structure and by positioning the energy storage system on the tray,
- lifting the seat along a height axis of the seat, by lifting the seat structure,
- inserting the seat into the vehicle cab and positioning the seat on the floor of the vehicle cab, and
- attaching the seat structure to the floor of the vehicle cab.
